# DEMANDE DE BREVET EUROPEEN

(11) **EP 4 671 016 A1**
(43) Date de publication de la demande: **31.12.2025**
(21) Numéro de dépôt: 25182485.0
(22) Date de dépôt: 12.06.2025
(51) Int. Cl.: B60J 10/20, B60J 10/36, B60J 10/86, B60J 10/24

(54) **DISPOSITIF JOINTIF POUR PORTE DÉBOUCHANTE D'UN VÉHICULE AUTOMOBILE**

(30) Priorité: 25.06.2024 FR 2406810
(71) Demandeur: Renault s.a.s, 92100 Boulogne Billancourt (FR)
(72) Inventeur: MIREA, Adrian, 062203 BUCAREST (RO)

(57) **Abrégé**

L'invention concerne un dispositif (1) jointif pour une porte (2) débouchante d'un véhicule automobile, le dispositif (1) jointif comprenant :
- un support (3) rigide comprenant des moyens (4) de solidarisation par clipsage du support (3) rigide et de ladite porte (2) débouchante,
- un joint (5) tubulaire élastiquement déformable en compression radiale, solidaire du support (3) rigide et présentant une base (6) maintenue en contact avec le support (3) rigide et une crête (7) apicale opposée à la base (6),
caractérisé en ce que, selon toute coupe droite transversale du joint (5) tubulaire, la crête (7) apicale est déportée latéralement par rapport à la médiatrice (8) de la base (6) de façon que le joint (5) tubulaire déformé par un ourlet (9) d'un côté (10) de caisse du véhicule automobile, du fait de la fermeture de la porte (2) débouchante, comble un espace (11) s'étendant entre l'ourlet (9) et un bord, dit bord (12) externe, longitudinal du support (3) rigide, ledit bord (12) externe s'étendant sensiblement en regard d'un secteur du bord périphérique de ladite porte (2) débouchante.

## Description

### [Domaine technique]

L'invention concerne un dispositif jointif pour une porte débouchante -notamment d'une porte débouchante arrière- d'un véhicule automobile. L'invention concerne en particulier un dispositif jointif conformé pour établir une jonction étanche entre ladite porte débouchante et un passage de roue s'étendant en regard de ladite porte débouchante.

### [État de la technique antérieure]

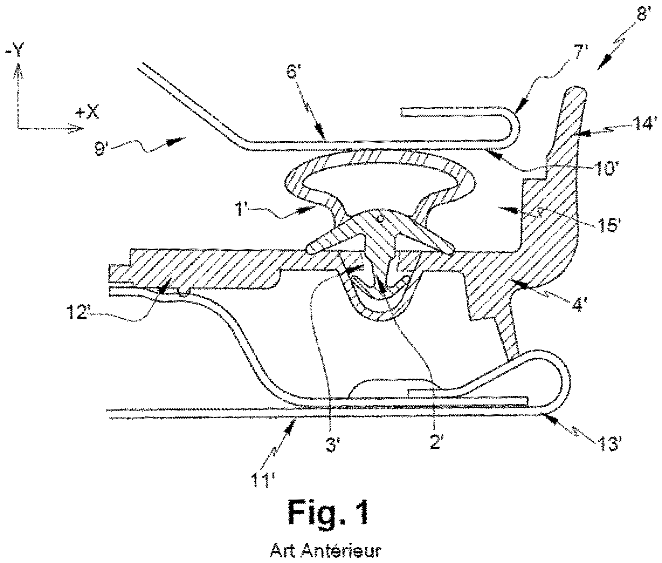

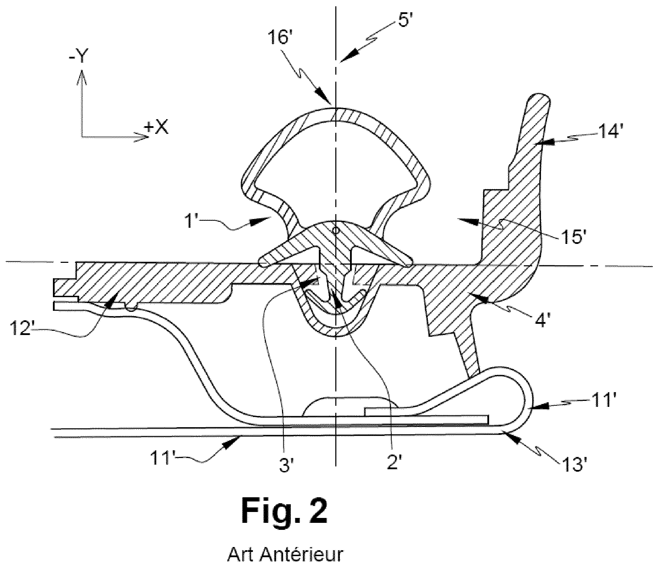

On connait un dispositif d'étanchéité d'une porte débouchante, représenté en coupe transversale en Figure 1 dans un état de fermeture de la porte débouchante et en Figure 2 dans un état d'ouverture de la porte débouchante. Le dispositif d'étanchéité connu représenté comprend un profilé 1' en caoutchouc présentant une nervure 2' longitudinale présentant selon toute coupe droite transversale, une forme globalement en T s'étendant sur toute la longueur du profilé 1' en caoutchouc et adaptée pour pouvoir coopérer avec une rainure 3' longitudinale traversante formée sur toute la longueur d'un support 4' rigide. L'assemblage du profilé 1' en caoutchouc et du support 4' rigide par glissement de la nervure 2' en T, longitudinalement dans la rainure 3' longitudinale traversante du support 4' rigide est délicate et nuit à l'optimisation du temps nécessaire à l'assemblage du dispositif d'étanchéité et de la porte débouchante.

L'invention vise à pallier cet inconvénient.

Par ailleurs, le profilé 1' en caoutchouc de ce dispositif d'étanchéité connu représenté en coupe droite transversale en Figure 2 dans un état élastiquement déployé (ladite porte débouchante étant ouverte) est de forme symétrique par rapport à son plan 5' médian et est disposé pour pouvoir coopérer par écrasement (Figure 1) avec une partie 6' de côté de caisse sensiblement plane et à distance d'un ourlet 7' bordant le passage 8' de roue. Cet écrasement du profilé 1' permet certes de former une barrière entre le passage 8' de roue et l'habitacle 9' du véhicule, vis-à-vis des salissures projetées par la rotation des roues, mais il autorise aussi, de manière très désavantageuse, une accumulation de telles salissures sur une autre partie 10' de côté de caisse, s'étendant juste en retrait de l'ourlet 7'. Une telle accumulation de salissure et/ou la détérioration de la peinture pouvant résulter de cette accumulation sont de nature à nuire à la Qualité Perçue du véhicule automobile.

L'invention vise à pallier cet inconvénient.

Dans tout le texte, on entend par « porte débouchante » une porte de véhicule automobile dont au moins un secteur de bord périphérique de cette porte est amené à être, lorsque la porte est en position de fermeture du véhicule, en regard d'un bord de carrosserie ou de caisse délimitant un passage de roue -notamment un passage de roue arrière- de ce véhicule automobile. Autrement dit, une porte « débouchante » d'un véhicule automobile est une porte qui couvre sensiblement entièrement le côté de caisse de ce véhicule automobile et qui s'étend au moins en partie dans la zone d'un passage de roue.

Ledit secteur de bord périphérique de la porte débouchante et le bord de carrosserie délimitant le passage de roue correspondant constituent une zone privilégiée d'entrée de salissures (eau, poussières, particules solides, gravillons, etc...) projetées par la roue en rotation lorsque le véhicule automobile est en mouvement sur une voie de circulation. Ces salissures peuvent s'accumuler sur au moins une partie de carrosserie du véhicule automobile en regard de laquelle la porte en position de fermeture du véhicule est apposée, notamment sur le bavolet.

D'une part, ces salissures sont de nature en elles-mêmes à nuire à la prestation de Qualité Perçue du véhicule automobile.

L'invention vise à pallier cet inconvénient.

D'autre part, s'agissant de matière solides et abrasives, ces salissures sont de nature à dégrader la peinture du véhicule du fait de leur accumulation entre la porte et la partie de carrosserie du véhicule automobile en regard de laquelle la porte en position de fermeture s'étend et du fait des vibrations procurées par le véhicule automobile en déplacement et du caractère abrasif des salissures. Cette dégradation, notamment ces rayures, de la peinture est également de nature en elle-même à nuire à la Qualité Perçue du véhicule automobile.

L'invention vise à pallier cet inconvénient.

L'invention vise à pallier l'ensemble de ces inconvénients.

L'invention vise donc à proposer un dispositif jointif pour une porte débouchante d'un véhicule automobile dont le montage est facilité.

L'invention vise aussi à proposer un tel dispositif jointif qui soit formé à partir de composants susceptibles d'être fabriqués à l'échelle industrielle et qui soient peu onéreux.

L'invention vise aussi à proposer un tel dispositif jointif permettant d'assurer une bonne prestation Qualité Perçue.

### [Exposé de l'invention]

Pour ce faire, l'invention concerne un dispositif jointif pour une porte débouchante d'un véhicule automobile, le dispositif jointif comprenant :
- un support rigide comprenant des moyens de solidarisation par clipsage du support rigide et de ladite porte débouchante,
- un joint tubulaire élastiquement déformable en compression radiale, solidaire du support rigide et présentant une base maintenue en contact avec le support rigide et une crête apicale opposée à la base, la base et la crête formant le joint tubulaire,
caractérisé en ce que, selon toute coupe droite transversale du joint tubulaire, la crête apicale est déportée latéralement par rapport à la médiatrice de la base de façon que le joint tubulaire déformé par un ourlet (délimitant un passage de roue) d'un côté de caisse du véhicule automobile, du fait de la fermeture de la porte débouchante, comble -notamment comble totalement- un espace s'étendant entre l'ourlet et un bord, dit bord externe, longitudinal du support rigide, ledit bord externe s'étendant sensiblement en regard d'un secteur du bord périphérique de ladite porte débouchante.

Dans tout le texte,
- on entend par « ourlet » ou « serti » le résultat de l'opération de sertissage employée dans l'industrie automobile, consistant au repliement d'un bord d'une peau extérieure du véhicule automobile sur elle-même ou sur un renfort intérieur et permettant d'optimiser la géométrie finale de cette peau extérieure, d'améliorer la résistance et la rigidité cette peau et de sursoir aux risques de coupure procurés par ce bord de peau extérieure,
- les termes « avant », « arrière », « droit(e) », « gauche », « inférieur », « supérieur », « haut » et « bas » sont à considérer par rapport à un véhicule en état normal de progresser,
- le repère XYZ renvoie à un repère orthonormé direct XYZ classiquement utilisé en conception automobile, dans lequel l'axe X désigne la direction longitudinale avant-arrière du véhicule, orienté vers l'arrière, l'axe Y désigne la direction transversale et est orienté vers la droite du véhicule, l'axe Z désigne la direction verticale, et est orienté vers le haut.

Selon l'invention, le joint tubulaire est disposé et conformé pour pouvoir coopérer avec la partie d'ourlet formant le passage de roue s'étendant en regard de ladite porte débouchante. Selon l'invention, la porte du véhicule étant fermée, le joint tubulaire coopère avec la partie d'ourlet formant le passage de roue s'étendant en regard de ladite porte débouchante, ce par quoi le joint tubulaire est déformé par l'ourlet et comble l'espace s'étendant entre l'ourlet du passage de roue et le secteur de bord périphérique de ladite porte débouchante. De ce fait, le bavolet est protégé vis-à-vis de salissures susceptibles d'être projetées par une roue du véhicule automobile en déplacement. L'accumulation de telles salissures dans cet espace est empêchée, les risques de dégradation de la peinture du bavolet sont limités et la prestation de Qualité Perçue est maintenue.

Selon l'invention, la fonction antisalissures du dispositif jointif est réalisée sur l'ourlet et non sur une surface sensiblement plane du bavolet. La peinture du bavolet n'est pas détériorée et la prestation de Qualité Perçue est maintenue.

Le support rigide est conformé pour recouvrir longitudinalement le secteur de bord périphérique de ladite porte débouchante, s'étendant en regard d'une portion d'un bord de carrosserie délimitant le passage de roue.

Selon l'invention, la crête apicale du joint tubulaire est déportée latéralement par rapport à la médiatrice de la base au moins dans un état d'ouverture de la porte débouchante, le joint tubulaire étant dans un état non écrasé par la porte débouchante et ramené élastiquement dans cet état non écrasé.

Selon certains modes de réalisation, les moyens de solidarisation du support rigide et de ladite porte débouchante comprennent au moins un organe de solidarisation du support rigide et de ladite porte débouchante par clipsage. Selon ces modes de réalisation, l'organe de solidarisation du support rigide et de ladite porte débouchante est un organe de solidarisation du support rigide et de ladite porte débouchante coopérant avec ladite porte débouchante par déformation élastique.

Selon certains modes de réalisation, le joint tubulaire est un joint tubulaire extrudé. La production industrielle d'un précurseur de joint tubulaire extrudé est facilitée et est réalisée à moindre coût, le joint tubulaire étant obtenu par découpe transversale du précurseur de joint tubulaire à la longueur requise.

Selon certains modes de réalisation, la base du joint tubulaire présente une pluralité d'œillets traversants, chaque œillet traversant étant adapté pour recevoir un organe d'assemblage du joint tubulaire et du support rigide, chaque organe d'assemblage étant adapté pour coopérer avec l'un des œillets traversants du joint tubulaire et avec un percement traversant du support rigide.

Selon certains modes de réalisation avantageux, chaque organe d'assemblage est un organe d'assemblage du joint tubulaire et du support rigide par clipsage (déformation élastique).

Selon certains modes de réalisation, la base du joint tubulaire comprend de 5 à 10 œillets traversants, notamment de 6 à 7 œillets traversants.

Selon certains modes de réalisation, le support rigide est un support rigide formé de deux matériaux polymères bi-injectés. La production par bi-injection, aussi dénommée injection plastique bi-matière, permet de produire au moyen d'une seule presse un support rigide formé de matériaux polymères aux caractéristiques fonctionnelles différentes. La production industrielle du support rigide est donc facilitée.

Selon certains modes de réalisation, le support rigide bi-injecté est formé d'un premier matériau thermoplastique dur -notamment de polypropylène- et d'un deuxième matériau élastomère thermoplastique.

Selon certains modes de réalisation, le support rigide bi-injecté est formé d'une partie principale comprenant les moyens de solidarisation par clipsage du support rigide sur ladite porte débouchante et d'une surépaisseur s'étendant sensiblement orthogonalement à ladite partie principale.

Selon certains modes de réalisation, la partie principale est formée de polypropylène et ladite surépaisseur est en au moins un matériau élastomère thermoplastique.

Selon certains modes de réalisation, ladite porte débouchante du véhicule automobile est une porte débouchante arrière du véhicule automobile. Rien n'empêche cependant de prévoir, selon d'autres modes de réalisation, que ladite porte débouchante du véhicule automobile soit une porte débouchante avant d'un véhicule automobile, notamment d'un véhicule automobile utilitaire.

Selon certains modes de réalisation, ladite porte débouchante est une porte battante. Selon certains modes de réalisation, ladite porte débouchante est une porte mixte. Selon certains modes de réalisation ladite porte débouchante est une porte à cadre. Selon certains modes de réalisation, ladite porte débouchante est une porte mixte battante et débouchante.

L'invention s'étend à un véhicule automobile à porte débouchante comprenant au moins un dispositif jointif selon l'invention.

### [Description des dessins]

D'autres caractéristiques et avantages de l'invention apparaîtront à la lecture de la description qui va suivre. Celle-ci est non limitative, purement illustrative et doit être lue en regard des dessins annexés sur lesquels :
[Fig. 1] la Figure 1 est une représentation en coupe transversale d'un dispositif connu de l'art antérieur, d'étanchéité d'une porte de véhicule automobile, ladite porte étant rabattue dans un état de fermeture,
[Fig. 2] la Figure 2 est une représentation en coupe transversale d'un dispositif d'étanchéité d'une porte de véhicule automobile connu de l'art antérieur, ladite porte étant dans un état d'ouverture,
[Fig. 3] la Figure 3 est une illustration d'une porte débouchante d'un véhicule automobile, dans un état de fermeture,
[Fig. 4] la Figure 4 est une vue générale à plat d'un dispositif jointif selon l'invention monté solidaire d'une porte débouchante d'un véhicule automobile,
[Fig. 5] la Figure 5 est une vue en coupe droite transversale selon le plan B-B du dispositif jointif selon l'invention représenté en Figure 4,
[Fig. 6] la Figure 6 est une représentation en coupe transversale d'un détail d'un joint tubulaire d'un dispositif jointif selon l'invention dans une première position relative de la porte débouchante par rapport au bord du passage de roue,
[Fig. 7] la Figure 7 est une représentation en coupe transversale d'un détail du joint tubulaire d'un dispositif jointif selon l'invention dans une deuxième position relative de la porte débouchante par rapport au bord du passage de roue,
[Fig. 8] la Figure 8 est une représentation en coupe transversale d'un détail du joint tubulaire d'un dispositif jointif selon l'invention dans une troisième position relative de la porte débouchante par rapport au bord du passage de roue, correspondant à une position de fermeture de la porte débouchante, et [Fig.9] la Figure 9 est une illustration d'un repère orthonormé direct XYZ classiquement utilisé en conception automobile.

### [Description des figures 1 et 2 représentatives de l'art antérieur connu]

Les Figures 1 et 2 sont des représentations en coupe transversale d'un dispositif 1' d'étanchéité d'une porte 11' débouchante battante arrière d'un véhicule automobile, connu de l'art antérieur. En figure 1, ladite porte 11' débouchante est dans une position de fermeture de l'habitacle du véhicule automobile. La porte 11' présente un serti 13' formant un bord périphérique de ladite porte 11' débouchante. Ladite porte 11' débouchante est dite porte « débouchante » du fait qu'un secteur longitudinal de ce bord périphérique formé par le serti 13' s'étend en regard d'un ourlet 7' d'un côté 6' de caisse du véhicule, le serti 13' et l'ourlet 7' ménageant un espace débouchant directement sur ce passage 8' de roue. Dans l'état de fermeture de ladite porte débouchante, l'espace s'étendant entre le serti 13' et l'ourlet 7' débouche sur le passage 8' de roue de sorte que la rotation de la roue du véhicule en déplacement sur une voie de circulation entraine une projection de salissures en direction et dans l'espace débouchant entre l'ourlet 7' et un bord 14' externe d'un support 4' rigide solidaire de ladite porte 11' débouchante. Il en résulte une accumulation indésirable de telles salissures dans un espace 15' délimité par un profilé 1' en caoutchouc, un côté 6' de caisse et le support 4' rigide. Le support 4' rigide est monté solidaire de ladite porte 11' débouchante. Le support 4' rigide présente une partie 12' principale comprenant des moyens de fixation (non représentés) du support 4' rigide sur ladite porte 11' débouchante

En figure 2, ladite porte 11' débouchante est dans une position d'ouverture de l'habitacle du véhicule automobile dans laquelle le serti 13' s'étend à distance de l'ourlet bordant le passage de roue. Dans cette position d'ouverture de ladite porte débouchante, le dispositif 1' d'étanchéité ramené élastiquement dans un état non déformé, présente en toute position longitudinale du dispositif 1' d'étanchéité, un plan 5' de symétrie dans lequel s'étend une crête 16' apicale médiane du dispositif 1' d'étanchéité. Un tel dispositif 1' d'étanchéité symétrique connu de l'art antérieur ne permet pas de combler l'espace ménagé entre la porte 11' débouchante et l'ourlet 7', par écrasement du dispositif 1' d'étanchéité. Il ne satisfait pas pleinement les exigences d'une bonne prestation de Qualité Perçue.

### [Description des modes de réalisation de l'invention]

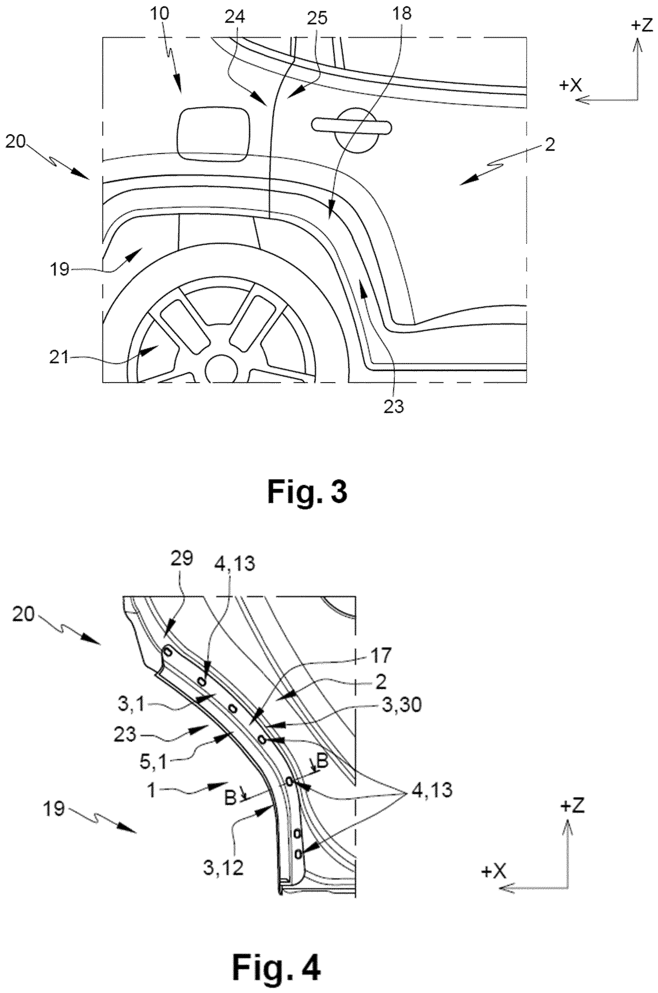

La figure 3 est une illustration de la définition d'une porte 2 débouchante d'un véhicule 20 automobile. Le détail arrière du véhicule 20 automobile représenté en Figure 3 présente une porte 2 débouchante arrière droite d'un véhicule 20 automobile. La porte 2 débouchante présente un secteur 23 de bord périphérique formant aussi une portion de bord d'un passage 19 de roue 21. Le secteur 23 de bord périphérique est un secteur 23 inférieur arrière de ladite porte 2 débouchante. La porte 2 débouchante présente un autre secteur 25 supérieur arrière de bord périphérique s'étendant en regard d'un bord 24 périphérique avant d'un côté 10 de caisse du véhicule 20 automobile. Comme il est visible en Figure 3, le secteur 23 inférieur arrière du bord périphérique de la porte 2 débouchante forme avec la portion de bord du passage 19 de roue 21 une zone de contact s'étendant dans un plan sensiblement vertical et orthogonal à l'axe de rotation de la roue 21. Ainsi, du fait de la rotation de la roue 21 du véhicule 20 automobile en déplacement, des salissures sont susceptibles d'être projetées dans une direction sensiblement orthogonale à l'axe de rotation de la roue 21 et notamment en direction et sur la zone de contact. De telles projections sont susceptible d'altérer la Qualité Perçue du véhicule 20 automobile.

La Figure 4 est une vue d'un détail de face intérieure d'une porte 2 débouchante arrière gauche d'un véhicule 20 automobile. La porte 2 débouchante est munie d'un dispositif 1 jointif selon l'invention, monté solidaire d'un secteur inférieur arrière du bord périphérique de la porte 2 débouchante. Le dispositif 1 jointif selon l'invention comprend un support 3 rigide supportant un joint 5 tubulaire sur toute sa longueur. Le support 3 rigide forme une partie 17 principale destinée à être solidarisée avec ladite porte 2 débouchante et une surépaisseur 18 destinée à s'étendre en regard du passage 19 de roue. La partie 17 principale du support 3 rigide est limitée latéralement par un bord, dit bord 12 externe, s'étendant à proximité d'un secteur du bord périphérique de ladite porte 2 débouchante et par un bord, dit bord 30 longitudinal interne, s'étendant à l'opposé dudit bord 12 externe. La partie 17 principale présente des moyens 4 de solidarisation de la partie 17 principale et du support 3 rigide avec la porte 2 débouchante. Les moyens 4 de solidarisation comprennent une pluralité d'organes 13 de solidarisation régulièrement répartis sur toute la longueur du support 3 rigide et à proximité dudit bord 30 longitudinal interne. Les organes 13 de solidarisation peuvent être de tout type. La solidarisation entre la porte 2 débouchante, le support 3 rigide et le dispositif 1 jointif est ainsi assurée. La partie 17 principale du support 3 rigide présente aussi un joint 5 tubulaire s'étendant à partir d'une face principale libre du support 3 rigide monté solidaire de la porte 2 débouchante, sur toute la longueur du support 3 rigide et à proximité et sensiblement parallèlement audit bord 12 externe du support 3 rigide. Le joint 5 tubulaire est ainsi solidaire de la porte 2 débouchante et s'étend sur le secteur 23 de bord périphérique de la porte 2 débouchante s'étendant en regard d'une portion de bord (non représenté) d'un passage 19 de roue lorsque la porte 2 débouchante à l'état de fermeture.

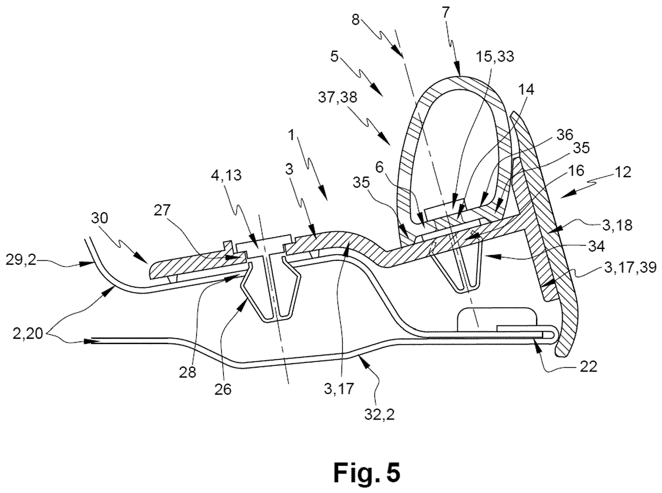

La Figure 5 est une vue en coupe droite transversale selon le plan B-B du dispositif 1 jointif selon l'invention représenté en Figure 4. En Figure 5, le dispositif 1 jointif est monté solidaire d'une porte 2 débouchante d'un véhicule 20 automobile, la porte 2 débouchante étant à l'état d'ouverture. Dans le mode de réalisation représenté, la porte 2 débouchante présente une peau 32 externe formant une face externe de la porte 2 débouchante et une peau 29 interne solidaire de la peau 32 externe par un serti 22 de la peau 32 externe. Le support 3 rigide est monté solidaire de la porte 2 débouchante par des moyens 4 de solidarisation comprenant une pluralité d'organes 13 de solidarisation régulièrement répartis sur toute la longueur de la partie 17 principale du support 3 rigide et à proximité dudit bord 30 longitudinal interne du support 3 rigide. Dans le mode de réalisation représenté, l'organe 13 de solidarisation du support 3 rigide et de la porte 2 débouchante comprend un pion 26 élastiquement déformable et adapté pour pouvoir coopérer avec un œillet 27 formé dans le support 3 rigide et avec un percement 28 pratiqué dans la peau 29 interne de la porte 2 débouchante et pour solidariser le support 3 rigide par clipsage du pion 26 dans la lumière du percement 28. La fixation du support 3 rigide sur la porte 2 débouchante est ainsi facilité. La partie 17 principale du support 3 rigide présente aussi une pluralité de percements 16 traversant le support 3 rigide. Les percements 16 traversant de la pluralité de percements sont répartis régulièrement, longitudinalement à proximité dudit bord 12 périphérique du support 3 rigide.

Le dispositif 1 jointif selon l'invention comprend un joint 5 tubulaire représenté en coupe droite transversale en Figure 5. Le joint 5 tubulaire est élastiquement déformable en compression radiale. Il peut être formé de tout matériau adapté pour pouvoir former, notamment par extrusion, une grande longueur d'un précurseur de joint tubulaire susceptible d'être découpé transversalement en tronçons dimensionnés pour former le joint 5 tubulaire. La production du joint 5 tubulaire s'en trouve ainsi techniquement facilitée et économiquement optimisée. Le joint 5 tubulaire présente selon toute coupe droite transversale, une base 6 sensiblement plane s'étendant sur toute la longueur du joint 5 tubulaire et adaptée pour pouvoir être maintenue en contact avec le support 3 rigide. La base 6 présente deux lèvres 35 longitudinales assurant l'étanchéité de contact du joint 5 tubulaire et du support 3 rigide assemblés l'un avec l'autre au moyen d'une pluralité d'organes 15 d'assemblage. La base 6 présente une pluralité d'œillets 14 traversant la base 6, les œillets 14 traversants de la pluralité d'œillets étant répartis régulièrement sur toute la longueur de la base 6 et du joint 5 tubulaire. Chaque œillet 14 traversant est dimensionné pour pouvoir recevoir et coopérer avec un organe 15 d'assemblage du joint 5 tubulaire et du support 3 rigide. Dans le mode de réalisation représenté, chaque organe 15 d'assemblage présente une tête 33 dimensionnée pour être maintenue au contact d'une face 36 interne de la base 6 et un corps 34 clipsable (élastiquement déformable) adaptée pour pouvoir être introduite dans un percement 16 traversant le support 3 rigide et coopérer élastiquement avec le percement 16 pour réaliser une liaison, notamment une liaison étanche aux liquides et aux solides, entre le support 3 rigide et le joint 5 tubulaire. La base 6 est prolongée radialement par une portion 37 d'enveloppe complémentaire de la base 6 et formant, avec la base 6, le joint 5 tubulaire.

A l'état libre et non compressé radialement du joint 5 tubulaire tel que représenté en Figure 5, la portion 37 d'enveloppe du joint 5 tubulaire présente selon toute coupe droite transversale, une crête 7 apicale s'étendant à l'opposé de la base 6. Selon l'invention, la crête 7 apicale est déportée latéralement par rapport à la médiatrice 8 de la base 6 à l'état libre et non compressé radialement du joint 5 tubulaire. Selon certains modes de réalisation, la crête 7 apicale est déportée vers le secteur 23 de bord périphérique de la porte 2 débouchante. Comme il va être décrit au vu des figues suivantes, le déport de la crête 7 apicale du joint 5 tubulaire permet que le joint 5 tubulaire puisse être déformé par un ourlet 9 d'un côté 10 de caisse du véhicule 20 automobile du fait de la fermeture de la porte 2 débouchante, l'ourlet 9 déformant le joint 5 tubulaire non pas par contact de la crête 7 apicale du joint 5 tubulaire avec l'ourlet 9 et appui de la crête 7 apicale du joint 5 tubulaire sur l'ourlet 9, mais par contact d'une face 38 latérale de la portion 37 d'enveloppe complémentaire de la base 6 avec l'ourlet 9 et appui d'une face 38 latérale de la portion 37 d'enveloppe complémentaire de la base 6 sur l'ourlet 9. Du fait du déport de la crête 7 apicale, la déformation du joint 5 tubulaire comprend une composante de déformation dirigée selon une direction parallèle à la médiatrice 8 de la base 6 du joint 5 tubulaire (écrasement du joint 5 tubulaire), mais également une composante non nulle de déformation dirigée vers ledit bord 12 externe du support 3 rigide. Du fait de cette déformation du joint 5 tubulaire à la fermeture de la porte 2 débouchante, la portion 37 d'enveloppe complémentaire de la base 6 comble l'espace s'étendant entre l'ourlet 9 et ledit bord 12 externe du support 3 rigide. Les salissures projetées du fait de la rotation de la roue ne peuvent pas s'accumuler dans cet espace et la prestation de Qualité Perçue est optimisée.

Dans le mode de réalisation représenté en Figure 5, ledit bord 12 externe de la partie 17 principale du support 3 rigide forme deux languettes 39 opposées l'une à l'autre et s'étendant à partir dudit bord 12 externe sensiblement orthogonalement au plan principal de la partie 17 principale. Dans le mode de réalisation représenté, la partie 17 principale et les languettes 39 opposées sont formées d'un même matériau. Par exemple, le matériau formant la partie 17 principale et les languettes 39 opposées du support 3 rigide est du polypropylène. Dans le mode de réalisation représenté en Figure 5, le support 3 rigide présente une surépaisseur 18 recouvrant les languettes 39 opposées et s'étendant au-delà des languettes 39. Avantageusement, la surépaisseur 18 est en au moins un matériau élastomère thermoplastique. La surépaisseur 18 en matériau élastomère thermoplastique permet de former un appui pour le joint 5 tubulaire, au moins lors de sa déformation à la fermeture de la porte 2 débouchante. Selon ces modes de réalisation, le support 3 rigide est un support rigide formé de deux matériaux polymères bi-injectés. La production par bi-injection, aussi dénommée injection plastique bi-matière, du support 3 rigide permet de produire au moyen d'une seule presse un support 3 rigide formé de matériaux polymères aux caractéristiques fonctionnelles différentes. La production industrielle du support 3 rigide est donc permise et facilitée.

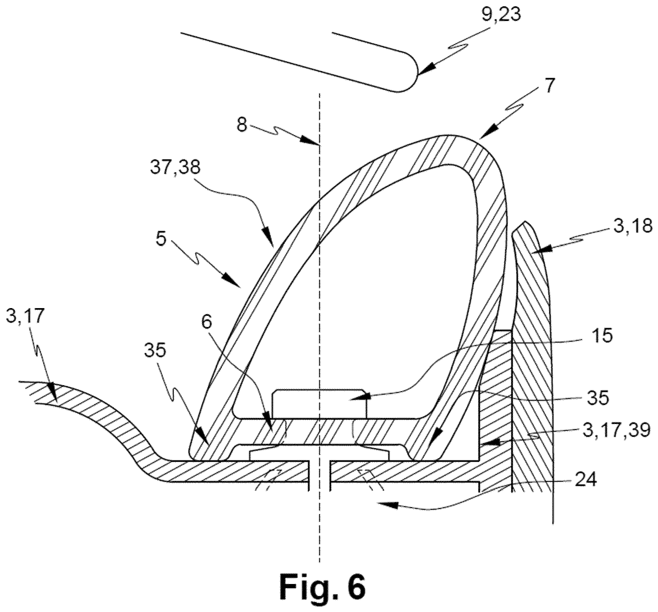

Les Figures 6, 7, 8 et 9 sont des représentations en coupe transversale d'un détail d'un joint 5 tubulaire d'un dispositif 1 jointif selon l'invention représenté dans des positions successives relatives de la porte 2 débouchante par rapport au bord 23 du passage19 de roue 21, lors de la fermeture de la porte 2 débouchante. Dans les modes de réalisation représentés en Figures 6, 7, 8 et 9, le bord 23 du passage 19 de roue 21 est schématisé de manière simplifiée par l'ourlet 9 formant le bord 23.

En Figure 6, la porte 2 débouchante est dans un état entre-ouvert et le dispositif 1 jointif selon l'invention s'étend à distance de l'ourlet 9 formant la portion de bord 23 périphérique du passage de roue. Le joint 5 tubulaire n'est pas déformé par l'ourlet 9 et la crête 7 apicale est déportée par rapport à la médiatrice 8 de la base 6 du joint 5 tubulaire.

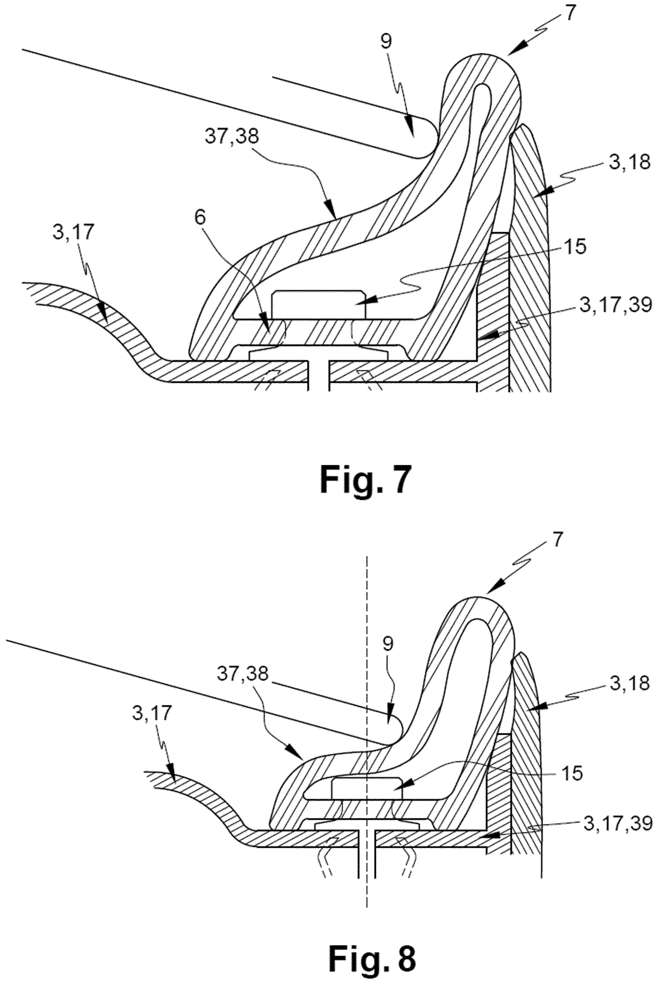

En Figure 7, la porte 2 débouchante est dans un état partiellement entre-ouvert et le joint 5 tubulaire du dispositif 1 jointif selon l'invention est en contact avec l'extrémité de l'ourlet 9. Du fait de ce contact et de la fermeture progressive de la porte 2 débouchante, le joint 5 tubulaire est déformé par enfoncement de la face 38 latérale de la portion 37 complémentaire de la base 6 du joint 5 tubulaire du fait du contact de cette face 38 latérale et de l'ourlet 9.

Du fait de ce contact et de la fermeture progressive de la porte 2 débouchante et du fait du déport de la crête 7 apicale, la déformation du joint 5 tubulaire comprend une composante de déformation dirigée selon une direction parallèle à la médiatrice 8 de la base 6 du joint 5 tubulaire (écrasement du joint 5 tubulaire), mais également une composante non nulle de déformation dirigée vers ledit bord 12 externe du support 3 rigide. L'appui du joint 5 tubulaire sur le support 3 rigide, notamment sur les languettes 39 opposées du support 3 rigide et/ou sur la surépaisseur 18, est augmenté et la déformation et l'enfoncement du joint 5 tubulaire est amplifié.

En Figure 8, la porte 2 débouchante est dans un état de fermeture complète et le joint 5 tubulaire du dispositif 1 jointif selon l'invention est en fin de course par rapport à l'extrémité de l'ourlet 9. Du fait de la fermeture complétée de la porte 2 débouchante, le joint 5 tubulaire est déformé par enfoncement de la face 38 latérale du joint 5 tubulaire du fait de cette fermeture complète. Du fait de cette fermeture complète de la porte 2 débouchante et du fait du déport de la crête 7 apicale, la 38 latérale du joint 5 tubulaire forme un contact étanche au moins aux liquides et aux solides avec l'ourlet 9 formant le bord du passage 19 de roue 21. En outre, du fait de cette fermeture complète de la porte 2 débouchante et du fait du déport de la crête 7 apicale, la face du joint 5 tubulaire opposée à la face 38 latérale forme un contact étanche au moins aux liquides et aux solides avec le support 3 rigide et avec le serti 22 de la porte 2 débouchante. L'espace entre l'ourlet 9 et le serti 22 est comblé de sorte que des salissures ne peuvent pas s'accumuler dans cet espace et la prestation de Qualité Perçue est validée.

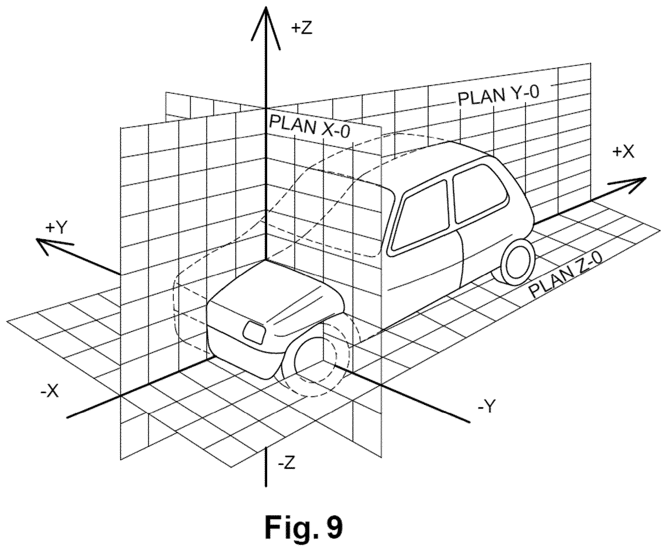

La Figure 9 est une illustration d'un repère orthonormé direct XYZ classiquement utilisé en conception automobile (selon la norme standard n° 0100112), dans lequel l'axe X désigne la direction longitudinale avant-arrière du véhicule automobile, orienté vers l'arrière du véhicule automobile, l'axe Y désigne la direction transversale et est orienté vers la droite du véhicule automobile, l'axe Z désigne la direction verticale, et est orienté vers le haut au véhicule automobile, les roues du véhicule automobile étant orientée vers le bas.

## Revendications

1. Dispositif (1) jointif pour une porte (2) débouchante d'un véhicule automobile, le dispositif (1) jointif comprenant :
- un support (3) rigide comprenant des moyens (4) de solidarisation par clipsage du support (3) rigide et de ladite porte (2) débouchante,
- un joint (5) tubulaire élastiquement déformable en compression radiale, solidaire du support (3) rigide et présentant une base (6) maintenue en contact avec le support (3) rigide et une crête (7) apicale opposée à la base (6),
**caractérisé en ce que**, selon toute coupe droite transversale du joint (5) tubulaire, la crête (7) apicale est déportée latéralement par rapport à la médiatrice (8) de la base (6) de façon que le joint (5) tubulaire déformé par un ourlet (9) d'un côté (10) de caisse du véhicule automobile, du fait de la fermeture de la porte (2) débouchante, comble un espace (11) s'étendant entre l'ourlet (9) et un bord, dit bord (12) externe, longitudinal du support (3) rigide, ledit bord (12) externe s'étendant sensiblement en regard d'un secteur du bord périphérique de ladite porte (2) débouchante.

2. Dispositif (1) selon la revendication 1, **caractérisé en ce que** les moyens (4) de solidarisation du support (3) rigide et de ladite porte (2) débouchante comprennent au moins un organe (13) de solidarisation du support (3) rigide et de ladite porte (2) débouchante par clipsage.

3. Dispositif (1) selon l'une des revendications 1 ou 2, **caractérisé en ce que** le joint (5) tubulaire est un joint tubulaire extrudé.

4. Dispositif (1) selon l'une des revendications 1 à 3, **caractérisé en ce que** la base (6) du joint (5) tubulaire présente une pluralité d'œillets (14) traversants, chaque œillet (14) traversant étant adapté pour recevoir un organe (15) d'assemblage du joint (5) tubulaire et du support (3) rigide, chaque organe (15) d'assemblage étant adapté pour coopérer avec l'un des œillets (14) traversants du joint (5) tubulaire et avec un percement (16) traversant du support (3) rigide.

5. Dispositif (1) selon la revendication 4, **caractérisé en ce que** chaque organe (15) d'assemblage est un organe d'assemblage du joint (5) tubulaire et du support (3) rigide par clipsage.

6. Dispositif (1) selon l'une des revendications 4 ou 5, **caractérisé en ce que** la base (6) du joint (5) tubulaire comprend de 5 à 10 œillets (14) traversants, notamment de 6 à 7 œillets traversants.

7. Dispositif (1) selon l'une des revendications 1 à 6, **caractérisé en ce que** le support (3) rigide est un support rigide formé de deux matériaux polymères bi-injectés.

8. Dispositif (1) selon la revendication 7, **caractérisé en ce que** le support (3) rigide bi-injecté est formé d'un premier matériau thermoplastique dur -notamment de polypropylène- et d'un deuxième matériau élastomère thermoplastique.

9. Dispositif (1) selon l'une des revendications 7 ou 8, **caractérisé en ce que** le support (3) rigide bi-injecté est formé d'une partie (17) principale comprenant les moyens (4) de solidarisation du support (3) rigide sur ladite porte (2) débouchante et d'une surépaisseur (18) s'étendant sensiblement orthogonalement à ladite partie (17) principale.

10. Dispositif (1) selon la revendication 9, **caractérisé en ce que** la partie (17) principale est formée de polypropylène et ladite surépaisseur (18) est en au moins un matériau élastomère thermoplastique.

11. Véhicule automobile à porte (2) débouchante comprenant au moins un dispositif (1) jointif selon l'une des revendications 1 à 10.
